# EUROPÄISCHE PATENTSCHRIFT

(11) **EP 1 617 248 B1**
(45) Veröffentlichungstag und Bekanntmachung des Hinweises auf die Patenterteilung: **16.01.2008**
(21) Anmeldenummer: 04023491.6
(22) Anmeldetag: 01.10.2004
(51) Int. Cl.: G02B 21/00, G02B 15/14

(54) **Zoomoptik für ein Lichtrastermikroskop mit linienförmiger Abtastung und Verwendung**
Zoom lens for an optical scanning microscope with line-shaped scanning and method of using it
Objectif à focale variable pour un microscope optique à balayage avec balayage linéaire et méthode d'utilisation

(30) Priorität: 16.07.2004 DE 102004034990
(43) Veröffentlichungstag der Anmeldung: 18.01.2006
(73) Patentinhaber: CARL ZEISS JENA GmbH, 07745 Jena (DE)
(72) Erfinder: Wolleschensky, Ralf, 07743 Jena (DE); Steinert, Jörg, 07743 Jena (DE); Goelles, Michael, 07745 Jena (DE); Uhlendorf, Kristina, 07743 Jena (DE)
(74) Vertreter: Geyer, Fehners & Partner

(56) Entgegenhaltungen:
- DE-A- 19 654 211
- US-A- 6 028 306
- US-A1- 2003 202 254
- US-A1- 2003 210 470

## Beschreibung

Die Erfindung bezieht sich auf ein konfokales Raster-Mikroskop mit einer Zoomoptik.

Konfokale Raster-Mikroskope, die üblicherweise als Laserscanningmikroskope ausgebildet sind, sind im Stand der Technik bekannt, beispielsweise sei hierzu auf die DE 197 02 753 A1 verwiesen. In jüngster Zeit wurden vermehrt mikroskopische Aufbauten, insbesondere konfokal abbildende Laserscanningmikroskope, für spektroskopische Aufnahmetechniken eingesetzt. Auf diese Weise ist es möglich, die spektroskopischen Eigenschaften eines ausgewählten Probenbereichs zerstörungs- und berührungslos zu vermessen. Die konfokale optische Mikroskopie ermöglicht dabei die selektive Detektion optischer Signale, welche innerhalb eines beugungsbegrenzten Konfokalvolumens erzeugt werden, dessen Größe im Mikrometerbereich liegt. Laserscanningmikroskope mit abtastenden Laserstrahlen und/oder Probenvorschubeinheiten können mit hoher Ortsauflösung zwei- oder dreidimensionale Darstellungen der untersuchten Probe erzeugen. Durch diese Eigenschaft hat sich die konfokale Laserscanningmikroskopie für fluoreszierende Proben im biomedizinischen Bereich nahezu als Standard durchgesetzt.

Üblicherweise werden Laserscanningmikroskope mit austauschbaren Objektiven verwendet. Dabei besteht häufig das Problem, daß innerhalb einer Objektivreihe entlang der optischen Achse konstante Pupillenlagen nur schwer realisierbar sind. In einigen Fällen können axiale Differenzen von 40 mm im Objektivraum auftreten, welche in konjugierten Raum der Scananordnung zwischen den Scanspiegeln sich auf bis zu 4 mm verkürzen. Ein mit einer solchen Fehlanpassung der Pupillenlage verbundenes seitliches Auswandern des Beleuchtungsbündels aus der Pupille kann während des Scans zu einer ungleichmäßigen Proben-Ausleuchtung führen.

Der Erfindung liegt deshalb die Aufgabe zugrunde, ein konfokales Raster-Mikroskop zu schaffen, mit der die Problematik der axial variierenden Pupillenlage behoben werden kann.

Diese Aufgabe wird erfindungsgemäß gelöst mit einer Zoomoptik für ein konfokales Raster-Mikroskop, die im Beleuchtungsstrahlengang des Mikroskopes einem ein Objekt erfassenden Objektiv vorgeschaltet ist, eine Zwischenabbildung des Objektes realisiert und eine Eintrittspupille des Beleuchtungsstrahlenganges mit variabler Vergrößerung und/oder variabler Abbildungslänge in eine Austrittspupille abbildet.

Die Erfinder erkannten, daß die Problematik einer axial variierenden Lage der (in Beleuchtungsrichtung gesehen) Eintrittspupille des Mikroskopobjektives überraschenderweise durch geeignete Gestaltung einer Zoom-Optik gelöst werden kann. Eine solche Zoom-Optik war im Stand der Technik zwar bekannt, jedoch unter völlig anderen Gesichtspunkten:
Laserscanningmikroskope erzeugen ein Probenbild, indem ein Beleuchtungsstrahl mittels einer Scananordnung scannend über eine Probe geführt wird und mittels einer Detektoranordnung, die über die Scananordnung den beleuchteten Probenbereich mittels einer konfokalen Blende abbildet, aus dem beleuchteten Spot stammende Strahlung aufgenommen wird. Der Durchmesser der konfokalen Blende bestimmt die Tiefen- und Ortsauflösung. Die Lage der konfokalen Blende legt die Schnittebenenlage in der Probe fest. Die DE 196 54 211 A1 verwendet eine Zoom-Optik zur Einstellung des wirksamen Durchmessers der konfokalen Blende bzw. zur Wahl der Schnittebenenlage.

Bei Laserscanningmikroskopen kann der abgetastete Bildbereich durch geeignete Ansteuerung des Scanners in einer Zoomfunktion ausgewählt werden, allerdings nur bei Einzelpunktabtastung in Kombination mit einem Galvanometerscanner. Bei parallel scannenden, d. h. mehrere Punkte gleichzeitig abtastenden Laserscanningmikroskopen ist eine Zoomfunktion durch Verstellung der Scananordnung nicht realisierbar, da die einzelnen abgetasteten Punkte in der Regel in einem festen geometrischen Verhältnis zueinander stehen, das beispielsweise bei einer Nipkow-Scheibe durch die Anordnung der Löcher in der Scheibe oder bei einer Multilochblendenanordnung durch die Lochblendengeometrie vorgegeben ist.

US 6.028.306 beschreibt ein solches Laserscanningmikroskop, das mittels einer feststehenden konfokalen Multilochblendenanordnung, die in Form einer Platte mit einer Vielzahl von Bohrungen ausgeführt ist, eine Multipunktbeleuchtungsquelle realisiert. Der Scananordnung ist eine Zoomoptikeinheit vorgeschaltet, die eine Vergrößerung oder Verkleinerung der Multipunktbeleuchtung ermöglicht. So kann ein Bereich wählbarer Größe auf der Probe abgescannt werden.

Erfindungsgemäß wir nun eine solche, im Stand der Technik für andere Zwecke bekannte Zoomoptik dazu verwendet, die Abbildungslänge (Abstand zwischen Eintritts- und Austrittspupille der Zoom-Optik) variierbar zu gestalten, wodurch Schwankungen der axialen Pupillenlage der Eintrittspupille des Mikroskopobjektives ausgleichbar sind. Dieser Ansatz ist schon deshalb überraschend, da der aus DE 196 54 211 A1 bekannte Aufbau die Pupillenlage im Mikroskop ebenso wenig zum Gegenstand hat wie das Mikroskop aus US 6.028.306. Die erfindungsgemäße Zoom-Optik erreicht also eine Doppelfunktion, indem zum einen die Scanfeldgröße durch Variation der Vergrößerung eingestellt werden kann, und zum anderen die Übertragungslänge so einstellbar ist, daß eine axial variierende Pupillenlage des Mikroskopobjektives ausgeglichen ist.

Die durch die Zoom-Optik erreichte variable Vergrößerung ermöglicht eine Größenverstellung des abgescannten Feldes auch und gerade für parallel arbeitende Multipunktscanner, bei denen eine Zoomfunktion durch Eingriff an der Scananordnung aufgrund der festen geometrischen Beziehung der parallel über die Probe geführten Punkte nicht möglich ist. Der für einzelpunktabtastende konfokale Raster-Mikroskope an und für sich bekannte Ansatz, die Ablenkeinrichtung so anzusteuern, daß ein Bildfeld in gewünschter und einstellbarer Größe abgetastet wird, ist bei solchen parallel abtastenden Systemen ebensowenig möglich, wie bei Systemen, die mit Resonanzscannern, d. h. in Resonanzschwingung angetriebenen Drehspiegeln, arbeiten, da dort die maximale Auslenkung so gut wie nicht verstellbar ist.

Eine mögliche Ausführungsform für parallel arbeitende Multipunktscanner stellt beispielsweise der bekannte Einsatz einer Nipkowscheibe dar, wie sie in der erwähnten US 6.028.306 oder der WO 8807695 oder auch in der EP 0 539 691 A1 offenbart ist. Die genannte US-Patentschrift schildert darüber hinaus ein parallel scannendes Laserscanningmikroskop mit einer Multi-Lochblendenplatte, der ein entsprechendes Mikrolinsenarray vorgeschaltet ist, so daß im Endeffekt eine Multipunktquelle erzeugt ist. Auch dieses Vorgehen bietet sich für eine Ausführungsform der Zoomoptik an. Ein anderer denkbarer Ansatz, um eine Probe mittels Laserscanningmikroskopie parallel, d. h. gleichzeitig an mehreren Punkten abzutasten, stellt die Verwendung einer konfokalen Schlitzblende dar.

Die vorliegende Zoom-Anordnung ist somit besonders vorteilhaft in einem konfokalen Raster-Mikroskop einzusetzen, das eine konfokale Multipunktabbildung, insbesondere mittels Nipkow-Scheibe, konfokaler Schlitzblende oder Multipunktlichtquelle, verwirklicht.

Ein Objektiv erreicht dann seine maximale Auflösung, wenn die Eintrittspupille vollständig ausgeleuchtet ist. Es ist deshalb zweckmäßig, geeignete Mittel vorzusehen, daß die Zoom-Optik die Eintrittspupille des Objektives immer vollständig ausleuchtet, unabhängig von der Einstellung der Zoom-Optik. Eine zweckmäßige Weiterbildung der Erfindung sieht folglich vor, daß in der Austrittspupille der Zoom-Optik ein als Blende wirkendes Element angeordnet ist, das nicht größer ist, als die kleinste Austrittspupillengröße, die im Betrieb der Zoom-Optik auftritt. Dadurch ist eine von der Einstellung der Zoom-Optik unabhängige Größe der Eintrittspupille bewirkt. Zweckmäßigerweise ist diese Größe gleich oder kleiner als die Größe der Objektiv-Eintrittspupille.

Im Betrieb der Zoom-Optik kann bei Einstellung einer Vergrößerung kleiner 1,0 die Austrittspupille sehr klein werden. Möchte man diese geringe Austrittspupillengröße als untere Grenze für die Auslegung vermeiden, ist es zweckmäßig, der Zoom-Optik ein Teleskop vorzuschalten, das eine entsprechende Pupillenaufweitung bewirkt. Zweckmäßigerweise wird man dieses Teleskop im Strahlengang nur dann aktivieren, wenn die Zoomoptik verkleinernd wirkt. Die Begriffe "vergrößern" und "verkleinern" sind hier auf die Abbildung der Probe bezogen.

Die Aktivierung dieses Teleskopes stellt sicher, daß die Ausgangspupille des Zooms, die bei einer Vergrößerung von 1,0 gegeben ist, als untere Grenze bei der Auslegung zugrundegelegt werden kann, ohne daß bei verkleinernder Wirkung der Zoom-Optik die Ausgangspupille so klein würde, daß möglicherweise die Objektivpupille unterfüllt wird. Bedingt durch die Austauschbarkeit des Objektives ist es zweckmäßig, das als Blende wirkende Element austauschbar zu gestalten, möchte man bewußt die Objektivpupille unterfüllen, d. h. nicht vollständig ausleuchten. Als Element kommt dann beispielsweise eine verstellbare Irisblende oder ein Mechanismus mit verschiedenen austauschbaren Blenden, beispielsweise ein Blendenrad mit verschiedenen Lochblenden in Frage.

In einer besonders kompakt bauenden Ausführungsform ist das als Blende wirkende Element durch die Scaneinheit realisiert; zum Beispiel kann die begrenzte Ausdehnung von Scannerspiegeln als Blende wirken.

Wie bereits erwähnt, kann die Zoom-Optik die Abbildungslänge so verstellen, daß eine axial variierende Pupillenlage der Eintrittspupille des Objektives ausgeglichen ist. Es ist deshalb zweckmäßig, daß die Zoom-Optik von einer Steuereinheit angesteuert so verstellbar ist, daß in einer ersten Betriebsart die variable Abbildungslänge realisiert ist. Um die Zoom-Optik auf ein aktiviertes, z. B. eingeschwenktes Objektiv anzupassen, ist es zweckmäßig, in dieser Betriebsart die Vergrößerung konstant zu halten.

Wurde die Einstellung der Pupillenlage vorgenommen, kann man eine weitere Betriebsart verwirklichen, in der für die Ausführung einer Zoomfunktion die Vergrößerung unter Ansteuerung durch die Steuereinheit verstellt wird, ohne daß Abbildungslänge variiert. Durch die Wirkung der Zoom-Optik in dieser Betriebsart kann das abgetastete Feld hinsichtlich seiner Größe verstellt werden. Verwendet man gleichzeitig eine zweiachsig ansteuerbare Scaneinheit, kann zusätzlich und abhängig vom Verstellen der Zoomvergrößerung ein beliebiger Bereich innerhalb des maximal zulässigen Scanfeldes als sogenannten "region of interest" ausgewählt werden, wobei diese "region of interest" nicht symmetrisch zur optischen Achse liegen muß. Im Detektionsstrahlengang wird dieser Versatz ebenso wie die Zoomvergrößerung in Richtung auf den Detektor hin wieder aufgehoben, wodurch die Beobachtung spezifischer Bereiche in einer Probe möglich ist. Darüber hinaus kann man Bilder aus verschiedenen "region of interest" gewinnen und anschließend zu einem besonders hochaufgelösten Bild zusammensetzen.

Eine besonders zweckmäßige Bauweise der Zoom-Optik setzt vier Optikgruppen ein, um die variable Pupillenabbildung auszuführen. Es ist dann für die Herstellung günstig, die vier Optikgruppen in Beleuchtungsrichtung gesehen mit positiver Brechkraft, negativer Brechkraft sowie zweimal positiver Brechkraft zu versehen. Zweckmäßigerweise sind zumindest drei Optikgruppen unabhängig voneinander mittels Antrieben verstellbar, und die Bewegung erfolgt derart, daß die Fokussierung von unendlich nach unendlich erhalten bleibt und je nach Betriebsart die Vergrößerung bzw. Abbildungslänge (Pupillenlage) verstellt wird. Auch kann es vorteilhaft sein, die in Beleuchtungsrichtung gesehen letzte Gruppe mit einem üblicherweise in einem konfokalen Raster-Mikroskop der Scaneinheit vorgeordneten Scanobjektiv als eine Einheit auszubilden. Jede Gruppe besteht vorzugsweise mindestens aus einer Linse. Um möglichst gute Eigenschaften bezüglich des verfügbaren Spektralbereiches sowie die möglichen Aperturen/Feldwinkel zu erreichen, sind die Gruppen bezüglich der Abbildungsfehler vorzugsweise in sich selbst korrigiert.

Die erwähnte Auswahl einer "region of interest" entweder nur durch die vom Zoom-Objektiv realisierte Zoomfunktion oder auch zusätzlich durch eine im möglichen Scanfeld asymmetrische Scannerbetriebsweise kann zusätzlich noch durch Verwendung eines den Strahlengang drehenden Elementes verbessert werden. Setzt man in eine Pupille des Beleuchtungsstrahlenganges beispielsweise ein Abbe-König-Prisma, kann das abgetastete, gezoomte Scanfeld gedreht werden. Im Detektionsstrahlengang wird diese Verdrehung durch das Prisma wieder aufgehoben. Ein solches Abbe-König-Prisma ist beispielsweise von LINOS Photonics, Deutschland, erhältlich und ist im Stand der Technik bekannt. Es wird für die erwähnte Bauweise drehbar im Strahlengang nahe einer Pupille angeordnet, da hier die Strahlbündel am engsten zusammengeführt sind und deshalb ein besonders kleines Prisma verwendet werden kann. Es führt je nach Drehwinkel eine Rotation um den doppelten Winkel des Bildfeldes ein.

Die Erfindung wird nachfolgend unter Bezugnahme auf die Zeichnung beispielhalber noch näher erläutert. Es zeigen:
- Fig. 1: eine schematische Darstellung eines Laserscanningmikroskops mit Strahlungsquellenmodul, Scanmodul sowie Detektormodul,
- Fig. 2: eine schematische Darstellung des Strahlenganges zwischen einer im Laserscanningmikroskop der Figur 1 vorgesehenen Zoom-Optik und der mit dem Laserscanningmikroskop erfaßten Probe,
- Fig. 3: eine Kurve zur Veranschaulichung von Pupillendurchmessern im Aufbau gemäß Figur 2,
- Fig. 4a, 4b und 5a, 5b sowie 6a, 6b: unterschiedliche Einstellungen der Zoomoptik der Figur 2, wobei die mit b bezeichneten Figuren eine Schnittdarstellung zeigen, die um 90° gegenüber den mit a bezeichneten Figuren gedreht ist,
- Fig. 7: ein Diagramm mit der Verstellung der vier Optikgruppen der Zoom-Optik der Figuren 4 bis 6 für einen ersten Betriebsmodus mit konstanter Abbildungslänge,
- Fig.8: ein Diagramm mit der Einstellung der vier Optikgruppen für einen zweiten Betriebsmodus mit konstanter Vergrößerung,
- Fig.9: eine Darstellung ähnlich der Figuren 7 und 8, jedoch für eine Betriebsweise mit gleichzeitiger Variation von Abbildungslänge und Vergrößerung,
- Fig. 10: eine schematische Darstellung eines Scanfeldes zur Veranschaulichung möglicher Zoom-Wirkungen,
- Fig. 11: eine schematische Darstellung eines Laser-Scanningmikroskops mit einer Nipkow-Scheibe,
- Fig. 12: eine schematische Darstellung eines Laser-Scanningmikroskops mit paralleler Mehrpunktbeleuchtung und -abtastung.

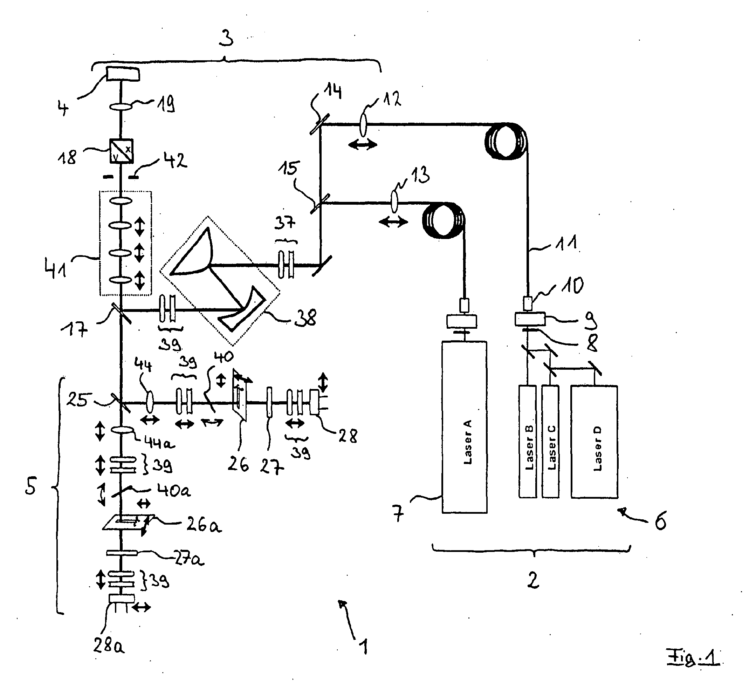

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

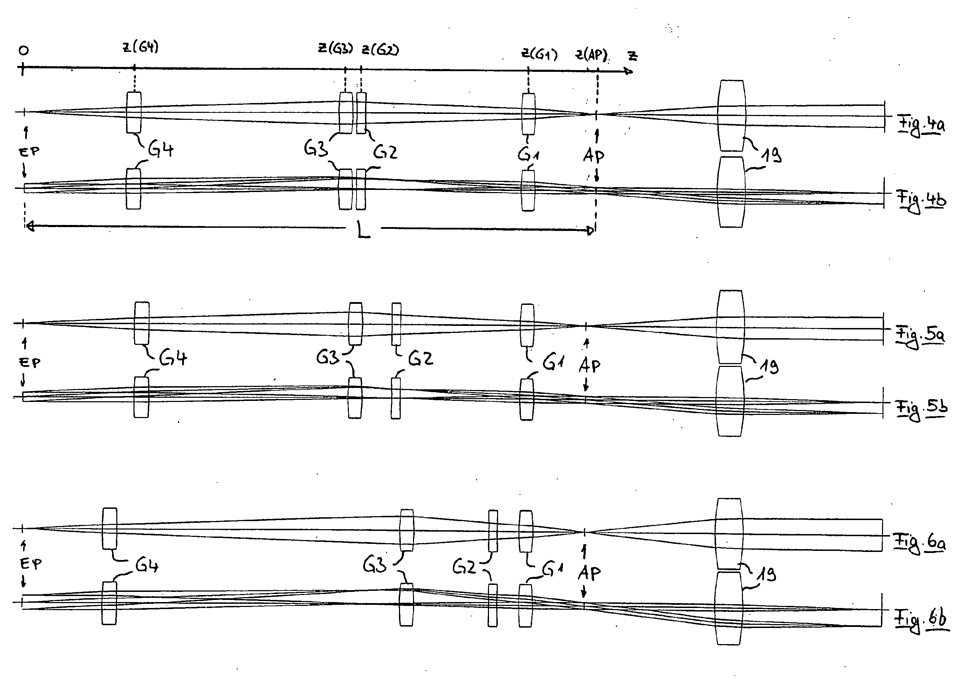

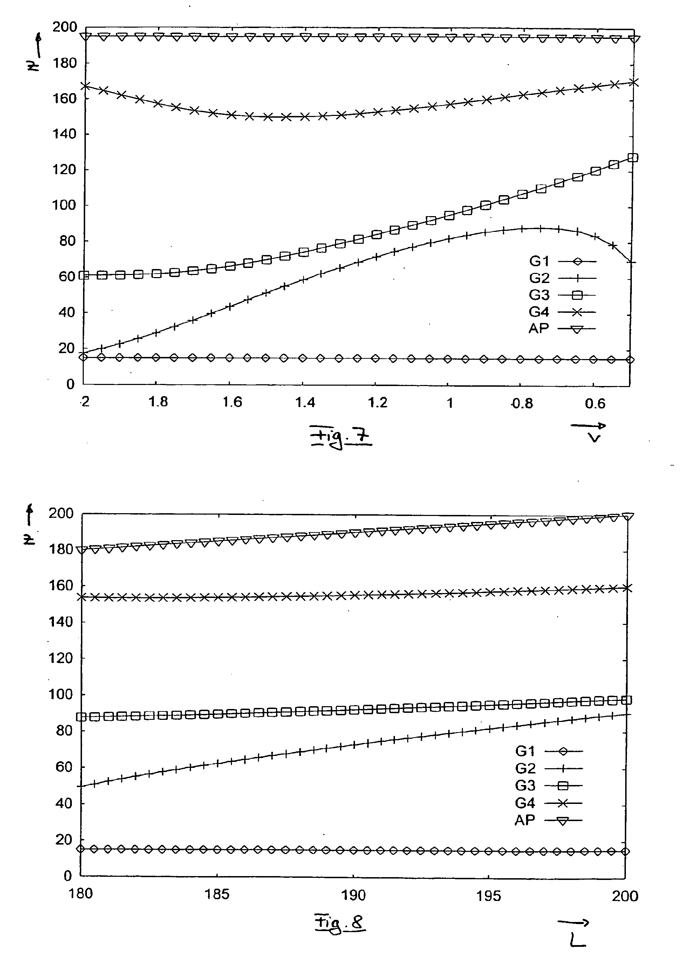

In der beispielhaften Darstellung der Figur 1 weist die Lasereinheit 6 drei Laser B, C, D auf, wohingegen die Lasereinheit 7 nur einen Laser A beinhaltet. Die Darstellung in Figur 6 und 7 ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführunsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

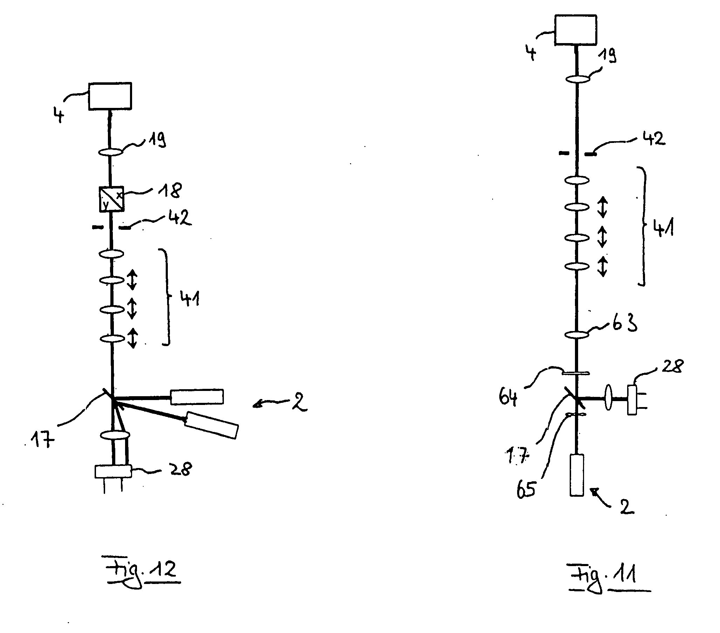

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 11 und 12 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linienscannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freitheitsgrade der Zoom-Optik 41 entsprechen genau der Zahl der Freitheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 2 zeigt schematisch eine mögliche Ausführungsform für den Strahlengang der Figur 1 zwischen dem Hauptfarbteiler 17 und einer im Mikroskopmodul 4 angeordneten Probe 23. Die Zoom-Optik 41, die zur Vereinfachung in der Darstellung der Figur 2 nur zweigliedrig eingetragen ist, bewirkt im Beleuchtungsstrahlengang BS eine Pupillenabbildung. Gleichzeitig entsteht im Gegenstandsstrahlengang GS, der in Figur 2 gestrichelt gezeichnet ist, ein Zwischenbild ZB1 in der Zoom-Optik 41. Die Zoom-Optik 41 fokussiert von Unendlich nach Unendlich. Die Ausgangspupille AP der Zoom-Optik 41 ist zweckmäßigerweise, wie bereits erwähnt, durch die Blende 42 beschnitten, so daß unabhängig vom Verstellen der Zoomvergrößerung immer ein festgelegter Pupillendurchmesser am nachgeordneten Scanobjektiv 19 vorliegt. Im Mikroskopmodul 4 ist zwischen Tubuslinse 20 und Objektiv 21 in der Objektivpupille OP eine Objektivblende OB angeordnet, die durch die Austrittspupille AP gefüllt oder sogar überausgeleuchtet wird. Dadurch kann die maximale Objektivauflösung erreicht werden.

Figur 3 zeigt die Wirkung der Blende 42 für die Füllung der Objektivpupille OP. Dabei ist im Diagramm der Figur 3 auf der vertikalen Achse der Pupillendurchmesser d und auf der horizontalen Achse die von der Zoom-Optik 41 bewirkte Vergrößerung v aufgetragen. Kurve 60 zeigt die Funktion, gemäß der sich der Pupillendurchmesser ohne die Blende 42 ändern würde. Die gestrichelte Linie 61 zeigt den Pupillendurchmesser nach der Blende 42 in Abhängigkeit von der Vergrößerung v. Die strichpunktierte Linie 62 veranschaulicht schließlich den Verlauf des Pupillendurchmessers der Objektivpupille OP. Wie zu sehen ist, ist durch die Objektivblende OB, die kleiner als die Blende 42 ist, die Objektivpupille unabhängig von der Vergrößerung v. Natürlich kann die Objektivblende OB auch durch entsprechende Fassungen im Objektiv 21 gegeben sein; es muß sich nicht um ein separates Bauteil handeln.

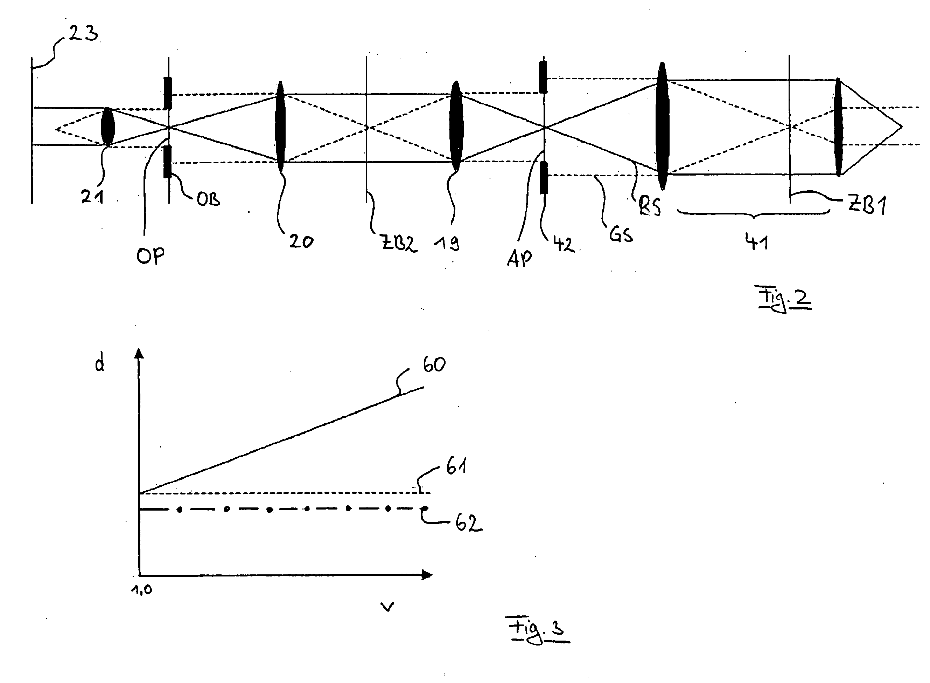

Die Figuren 4a/4b, 5a/5b sowie 6a/6b zeigen unterschiedliche Einstellungen des Zoomobjektivs 41, wobei die Darstellung gegenüber der Darstellung der Figur 2 invertiert ist, d. h. die Beleuchtungsrichtung verläuft in den Figuren 4 bis 6 von links nach rechts. Weiter ist in den Figuren 4 bis 6, wie in Figur 2 auch, zur Vereinfachung der Scanner 18 nicht eingezeichnet. Wie zu sehen ist, besteht in der in den Figuren 4 bis 6 exemplarisch gezeigten Bauweise das Zoom-Objetiv aus vier optischen Gruppen G1 bis G4, wobei die Gruppe G1 positive Brechkraft hat und fest angeordnet ist. Die zweite Gruppe G2 hat negative Brechkraft und wird zusammen mit den Gruppen G3 und G4, die wieder positive Brechkraft haben, bewegt. Die Bewegung erfolgt derart, daß die Fokussierung von unendlich nach unendlich erhalten bleibt und die Vergrößerung bzw. die Pupillenlage je nach Betriebsart eingestellt wird.

Weiter ist es in einer Ausbildungsvariante zweckmäßig, die Gruppe G1 mit dem nachfolgenden Scanobjektiv als Einheit auszubilden; in dieser Variante ist das Scanobjektiv also in Beleuchtungsrichtung vor dem (in den Figuren 4 bis 6 nicht gezeigten) Scanner angeordnet.

Jede Gruppe besteht aus mindestens einer Linse. Um den Anforderungen an den gewünschten Spektralbereich sowie die angestrebte Apertur/Feldwinkel zu genügen, sind die Gruppen bezüglich der Abbildungsfehler so weit wie möglich in sich korrigiert.

Die Fig. 7 bis 9 zeigen schematisch und beispielhaft die Bewegung der Variooptik mit den Gruppen G1 bis G4, wobei die Brennweiten wie folgt lauten: Brennweite G1, 45 mm; Brennweite G2, -153 mm; Brennweite G3, 45 mm; Brennweite G4, 89 mm. Die Brennweiten skalieren mit der Übertragungslänge L.

Zur Veranschaulichung ist in den Figuren 4 bis 6 weiter die Lage der Austrittspupille AP sowie der Eintrittspupille EP eingezeichnet. Die Übertragungslänge L ergibt sich aus dem Abstand zwischen Eintrittspupille EP und Austrittspupille AP. Für Figur 4a ist darüber hinaus die z-Koordinate, die entlang der optischen Achse gemessen wird, für die vier Gruppen G1 bis G4 eingetragen. Die Eintrittspupille ist dabei auf Position 0 gesetzt.

Die mit a bezeichneten Figuren zeigen jeweils eine Schnittebene, die gegenüber den mit b bezeichneten Figuren um 90° gedreht ist. Somit enthalten die Figuren 4a, 5a und 6a den Pupillenstrahlengang sowie die Figuren 4b, 5b sowie 6b den Objektstrahlengang. Aufgrund der im Ausführungsbeispiel verwendeten konfokalen Schlitzblendenanordnung mit linienförmiger Beleuchtung liegt im Objektstrahlengang immer dann eine Linie vor, wenn im Pupillenstrahlengang eine Pupille bzw. in den Fig. 4a, 5a, 6a ein Knotenpunkt vorliegt. Bei einer andersartigen konfokalen Abbildung (z. B. mit Nipkow-Scheibe, Multipunktscannner, Einzelpunktscanner) sind die Verhältnisse natürlich anders.

In den Figuren 5a/5b ist ein Vergrößerungsfaktor v = 1,4 eingestellt, wogegen die Stellung der Figuren 6a/6b bei gleicher Abbildungslänge eine Vergrößerung von v = 2,0 bewirkt. Gegenüber den Abbildungslängen der Figuren 5 und 6 ist in der Einstellung der Figuren 4a/4b die Abbildungslänge beim selben Vergrößerungsfaktor wie Figuren 5a/5b um 10 mm verlängert. Die in den Figuren eingezeichnete Lage der Austrittspupille AP zeigt dies deutlich.

Das Zoomobjektiv 41 kann also in zwei unterschiedlichen Betriebsmodi betrieben werden. Zum einen ist es möglich, die Vergrößerung v bei konstanter Abbildungslänge L zu verstellen. Eine Verstellung von der in Figuren 5a/5b gezeichneten Lage in die Lage gemäß Figuren 6a/6b ist beispielsweise ein Betrieb im ersten Betriebsmodus, der einen Scanfeld-Zoom verwirklicht. Die dafür möglichen Einstellungen der Gruppen G2 bis G4 sind in Figur 7 zu sehen, in der die Koordinaten der Gruppen G1 bis G4 auf der z-Achse, wie sie zur Figur 4a eingetragen ist, als Funktion der Vergrößerung v aufgetragen sind.

Der Begriff "Vergrößerung" ist hier wiederum auf die Wirkung der Zoom-Optik, d. h. die Bildvergrößerung bezogen. Eine Bildvergrößerung wird natürlich dann erreicht, wenn die Zoom-Optik in Beleuchtungsrichtung tatsächlich eine Verkleinerung des zugeführten Bildes der Beleuchtungsquelle zur Folge hat, d. h. wenn beispielsweise eine Brennlinie verkürzt wird. Entgegen der Beleuchtungsrichtung, d. h. in Detektionsrichtung, findet dagegen eine Vergrößerung statt.

Figur 8 zeigt einen zweiten Betriebsmodus, der mit konstanter Vergrößerung die Übertragungslänge verändert. Da die Auftragung entlang der z-Achse in Millimeter vorgenommen ist, sieht man deutlich, daß durch eine Verstellung der Zoom-Optik die Übertragungslänge z. B. um bis zu 20 mm variiert werden kann. Die Lage der Austrittspupille AP verschiebt sich gegenüber der (bei 0 mm befindlichen) Eintrittspupille sich von 180 auf 200 mm. Die Werte der Figur 8 betreffen dabei eine Veränderung der Übertragungslänge bei einem Vergrößerungsfaktor von 1,0.

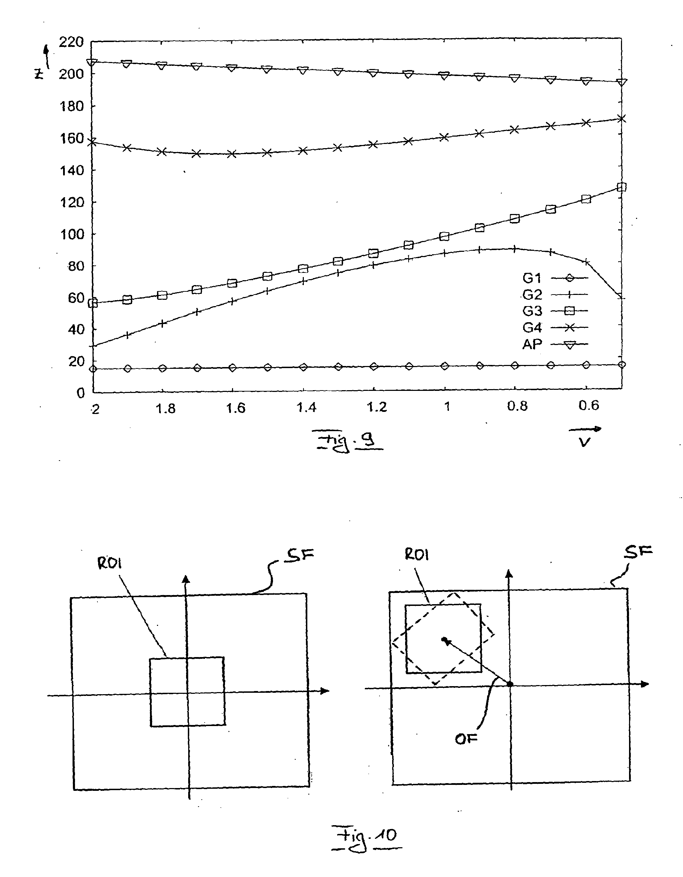

Figur 9 zeigt eine Betriebsweise, die eine Mischung aus der genannten ersten Betriebsweise (Figur 7) sowie der zweiten Betriebsweise (Figur 8) ist. Mit der in Figur 9 gezeigten Ansteuerung der Optikgruppen G2 bis G4 (Optikgruppe G1 wird wiederum nicht verstellt) wird die Vergrößerung v gleichzeitig mit der Übertragungslänge L (letzteres ergibt sich aus der veränderten Lage der Austrittspupille in Figur 9) variiert.

Figur 10 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF. Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 11 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 11 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 2 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 46 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 11 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 10 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 12, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 10 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist, wie in Figuren 11 und 12 ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen¹ und den eingesetzten Untersuchungsmethoden mit einer Vielzahl von Farbstoffen² ablesen.
Siehe z.B.:
¹B. Alberts et al. (2002): Molecular Biology of the Cell; Garland Science.
^{1,2}G. Karp (2002): Cell and Molecular Biology: Concepts and Experiments; Wiley Text Books.
^{1,2}R. Yuste et al. (2000): Imaging neurons - a laboratory Manual; Cold Spring Harbor Laboratory Press, New York.
²R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

### Entwicklung von Organismen

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:
■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.
■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.
■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:
- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

### Transportvorgänge in Zellen

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:
■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.
■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.
■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

### Wechselwirkungen von Molekülen

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:
■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.
■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.
■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

### Signalübertragung zwischen Zellen

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:
■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.
■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

## Patentansprüche

1. Konfokales Licht- Raster-Mikroskop mit einer Zoomoptik (41), die im Beleuchtungsstrahlengang (BS) des Mikroskopes (1) einem ein Objekt (23) erfassenden Objektiv (21) vorgeschaltet ist, **dadurch gekennzeichnet, dass** die Zoomoptik (41) eine Zwischenabbildung (ZB1) des Objektes realisiert, eine Einstrittspupille (EP) des Beleuchtungsstrahlenganges mit variabler Vergrößerung (v) und/oder variabler Abbildungslänge (L) in eine Austrittspupille (AP) abbildet und von einer Steuereinheit des Mikroskopes angesteuert verstellbar ist, wobei die Steuereinheit in einer ersten Betriebsart eine variable Vergrößerung (v) bei konstanter Abbildungslänge (L) und in einer zweiten Betriebsart eine variable Abbildungslänge bei konstanter Vergrößerung (v) realisiert.

2. Mikroskop nach Anspruch 1, wobei in der Austrittspupille (AP) ein als Blende (42) wirkendes Element angeordnet ist, das eine von der Einstellung der Zoomoptik unabhängige Größe der Austrittspupille (AP) bewirkt, wobei die Größe der Austrittspupille (AP) vorzugsweise kleiner als die Größe der Eintrittspupille (OP) des Objektivs ist.

3. Mikroskop nach Anspruch 2, wobei das als Blende (42) wirkende Element einen Scannerspiegel (18), eine Irisblende oder einen Blendenmechanismus mit verschiedenen, austauschbaren Lochblenden aufweist.

4. Mikroskop nach einem der Ansprüche 1 bis 3, wobei die Zoomeptik (41) vier Optikgruppen (G1 - G4) aufweist, wobei die Optikgruppen (G1 - G4) entgegen der Beleuchtungsrichtung gesehen positive (G1), negative (G2), positive (G3) und nochmals positive (G4) Brechkraft haben und ein Antrieb zur Verstellung mindestens drei der Optikgruppen (G2 - G4) vorgesehen ist.

5. Mikroskop nach Anspruch 4, wobei jede Optikgruppe (G1 - G4) für sich bezüglich Abbildungsfehlern korrigiert ist.

6. Mikroskop nach einem der obigen Ansprüche mit einer konfokalen Multipunktabbildung, insbesondere mittels einer Nipkow-Scheibe (64), einer konfokalen Schlitzblende (26) oder einer Multipunktlichtquelle.

7. Mikroskop nach einem der obigen Ansprüche mit einem Resonanzscanner.

8. Mikroskop nach einem der obigen Ansprüche mit einem nahe einer Pupille, insbesondere der Austrittspupille (AP), liegenden und im Strahlengang drehbaren Abbe-König-Prisma.

## Claims

1. A confocal light-scanning microscope, comprising zoom optics (41) arranged preceding an objective (21) in the illumination beam path (BS) of the microscope (1), said objective (21) sensing an object (23), **characterized in that** the zoom optics (41) generate an intermediate image (ZB1) of the object, that they image an entrance pupil (EP) of the illumination beam path at a variable magnification (v) and/or a variable image length (L) into an exit pupil (AP) and that they are adjustable under the control of a control unit of the microscope, which control unit realizes a variable magnification (v) at a constant image length (L) in a first mode of operation and a variable imaging length at a constant magnification (v) in a second mode of operation.

2. Microscope according to claim 1, wherein an element acting as a stop (42) is arranged in the exit pupil (AP), which element causes the exit pupil (AP) to have a size which is independent of the setting of the zoom optics, said size of the exit pupil (AP) preferably being smaller than the entrance pupil (OP) of the objective.

3. Microscope according to claim 2, wherein the element acting as a stop (42) comprises a scanning mirror (18), an iris diaphragm or a stop mechanism including different exchangeable aperture stops.

4. Microscope according to any one of claims 1 to 3, wherein the zoom optics (41) comprise four optical groups (G1 - G4), which optical groups (G1 - G4), when viewed in the opposite direction of the illumination direction, have positive (G1), negative (G2), positive (G3) and again positive (G4) refractive power, and a drive is provided for adjustment of at least three of said optical groups (G2 - G4).

5. Microscope according to claim 4, wherein each optical group (G1 - G4) is per se corrected with respect to imaging errors.

6. Microscope according to any one of the above claims, comprising confocal multi-point imaging, in particular by means of a Nipkow disk (64), a confocal slit diaphragm (26) or a multi-point light source.

7. Microscope according to any one of the above claims, comprising a resonance scanner.

8. Microscope according to any one of the above claims, comprising an Abbe-König prism, which is located near a pupil, in particular the exit pupil (AP), and is rotatable in the beam path.

## Revendications

1. Microscope optique à balayage à foyer commun comprenant une optique de zoom (41), qui est montée en amont d'un objectif (21) enregistrant un objet (23) dans la trajectoire de faisceau d'éclairage (BS) du microscope (1), **caractérisé en ce que** l'optique de zoom (41) réalise une formation d'image intermédiaire (ZB1) de l'objet, une pupille d'entrée (EP) de la trajectoire de faisceau d'éclairage avec grossissement (v) variable et/ou longueur de reproduction (L) variable formant l'image dans une pupille de sortie (AP) et pouvant être déplacée actionnée par une unité de commande du microscope, l'unité de commande réalisant dans un premier mode de service un grossissement (v) variable avec une longueur de reproduction (L) constante et dans un second mode de service une longueur de reproduction variable avec un grossissement (v) constant.

2. Microscope selon la revendication 1, un élément agissant comme obturateur (42) étant disposé dans la pupille de sortie (AP), lequel élément entraîne une grandeur de la pupille de sortie (AP) qui est indépendante du réglage de l'optique de zoom, la grandeur de la pupille de sortie (AP) étant de préférence inférieure à la grandeur de la pupille d'entrée (OP) de l'objectif.

3. Microscope selon la revendication 2, l'élément agissant comme obturateur (42) présentant un miroir scanner (18), un diaphragme à iris ou un mécanisme d'obturateur avec différents diaphragmes à trous permutables.

4. Microscope selon l'une quelconque des revendications 1 à 3, l'optique de zoom présentant les quatre groupes d'optique (G1 - G4), les groupes d'optique (G1 - G4) ayant une réfringence positive (G1), négative (G2), positive (G3) et une nouvelle fois positive (G4), vu dans le sens contraire au sens d'éclairage, et un entraînement étant prévu pour le déplacement d'au moins trois des groupes d'optique (G2 - G4).

5. Microscope selon la revendication 4, chaque groupe d'optique (G1 - G4) étant corrigé individuellement par rapport à des défauts de reproduction.

6. Microscope selon l'une quelconque des revendications susmentionnées comprenant un dispositif de reproduction multipoints à foyer commun, en particulier au moyen d'un disque de Nipkow (64), d'un diaphragme à fente (26) à foyer commun ou d'une source lumineuse multipoints.

7. Microscope selon l'une quelconque des revendications susmentionnées comprenant un scanner à résonance.

8. Microscope selon l'une quelconque des revendications susmentionnées comprenant un prisme d'Abbe-König, situé à proximité d'une pupille, en particulier de la pupille de sortie (AP) et pouvant tourner dans la trajectoire de faisceau.
